Europäisches Patentamt

European Patent Office

Office européen des brevets

(11) Veröffentlichungsnummer: **0 106 120**
**A1**

# (12) EUROPÄISCHE PATENTANMELDUNG

(21) Anmeldenummer: 83108829.9

(22) Anmeldetag: 07.09.83

(51) Int. Cl.³: **G 01 N 31/00**

(30) Priorität: 22.09.82 DE 3235106

(43) Veröffentlichungstag der Anmeldung:
25.04.84 Patentblatt 84/17

(84) Benannte Vertragsstaaten:
DE FR GB

(71) Anmelder: ALKEM GMBH
Postfach 110069
D-6450 Hanau 11(DE)

(72) Erfinder: Bülte, Rudolf
Rosenstrasse 15
D-6466 Gründau(DE)

(74) Vertreter: Mehl, Ernst, Dipl.-Ing. et al,
Postfach 22 01 76
D-8000 München 22(DE)

(54) **Verfahren zum quantitativen Bestimmen des Stickstoffgehaltes einer Feststoffprobe und Einrichtung insbesondere zur Durchführung dieses Verfahrens.**

(57) Das Auffangen von kondesiertem Wasser in einem Vorlagegefäß (15) wird bei einem Verfahren zum quantitativen Bestimmen des Stickstoffgehaltes einer Feststoffprobe, die in stickstofffreier Säure in einem erhitzten Lösekolben (2) gelöst wird, dessen Gasraum über der Lösungsflüssigkeit über einen Kühler mit einer Vorlagelösung (16) in dem Vorlagegefäß (15) in Verbindung steht, in der nach Zugabe einer Alkalilauge zur im Lösekolben (2) befindlichen Lösungsflüssigkeit dort entstehende flüchtige Ammoniumverbindungen aufgefangen werden, dadurch vermieden, daß als Kühler ein Rückflußkühler (5) mit zugeordnetem Flüssigkeitsverteiler (4) verwendet wird, über den Kondensat aus dem Rückflußkühler (5) während des Lösens der Feststoffprobe in den Lösekolben (2) zurückgeführt und mit dem das Vorlagegefäß (15) zum Auffangen der Ammoniumverbindungen in der Vorlagelösung (16) an den Rückflußkühler (5) angeschlossen wird.

EP 0 106 120 A1

./...

Croydon Printing Company Ltd.

ALKEM GmbH

Hanau

Unser Zeichen

VPA 82 P 6 4 0 7 E

Verfahren zum quantitativen Bestimmen des Stickstoffgehaltes einer Feststoffprobe und Einrichtung insbesondere zur Durchführung dieses Verfahrens

Die Erfindung betrifft ein Verfahren zum quantitativen Bestimmen des Stickstoffgehaltes einer Feststoffprobe, die in stickstofffreier Säure in einem erhitzten Lösekolben gelöst wird, dessen Gasraum über der Lösungsflüssigkeit über einen Kühler mit einer sauren Vorlagelösung in einem Vorlagegefäß in Verbindung steht, in der nach Zugabe einer Alkalilauge zur im Lösekolben befindlichen Lösungsflüssigkeit dort entstehende flüchtige Ammoniumverbindungen aufgefangen werden, und eine Einrichtung  insbesondere zur Durchführung dieses Verfahrens.

Ein derartiges Verfahren ist bereits üblich. Bei diesem üblichen Verfahren wird als Kühler ein Durchlaufkühler verwendet. Während des Lösens der Feststoffprobe in der stickstofffreien Säure im Lösekolben destilliert Wasser aus dem Lösekolben ab und wird im Durchlaufkühler kondensiert. Das Kondensat wird im Vorlagegefäß aufgefangen. Dies bedeutet, daß dem Lösekolben während des Lösens der Feststoffprobe in der stickstofffreien Säure ständig Ersatzwasser zugeführt werden muß. Ferner muß das Vorlagegefäß vor dem Auffangen der beim Zugeben der Alkalilauge in den Lösekolben entstehenden flüchtigen Ammoniumver-

16.9.1982 W1 5 Ant

bindungen ausgetauscht werden, da sonst die saure Vorlagelösung im Vorlagegefäß während des Lösens der Feststoffprobe im Lösekolben durch das im Vorlagegefäß
aufgefangene kondensierte Wasser zu stark verdünnt
werden würde. Ist die Feststoffprobe zudem noch in der
stickstofffreien Säure schwer löslich, ist ein ganz erheblicher Wasserdurchsatz durch den Lösekolben und den
Durchlaufkühler in das Vorlagegefäß erforderlich, was
einen umfangreichen apparativen Aufwand bedingt.

Der Erfindung liegt die Aufgabe zugrunde, das Auffangen
von kondensiertem Wasser im Vorlagegefäß zu reduzieren.

Zur Lösung dieser Aufgabe ist ein Verfahren der eingangs
erwähnten Art erfindungsgemäß dadurch gekennzeichnet,
daß als Kühler ein Rückflußkühler mit zugeordnetem Flüssigkeitsteiler verwendet wird, über den Kondensat aus
dem Rückflußkühler während des Lösens der Feststoffprobe
in den Lösekolben zurückgeführt und mit dem das Vorlagegefäß zum Auffangen der Ammoniumverbindungen in der Vorlagelösung an den Rückflußkühler angeschlossen wird.

Auf diese Weise wird während des Lösens der Feststoffprobe in der stickstofffreien Säure im Lösekolben verdampftes Wasser stets wieder durch das Wasser ersetzt,
das im Rückflußkühler kondensiert und das aus dem Lösekolben stammt. Eine ständige Zufuhr von frischem Wasser
in den Lösekolben erübrigt sich also. Erst wenn im
Lösekolben durch Zusetzen der Alkalilauge die flüchtigen
Ammoniumverbindungen entstehen, werden diese in der Vorlagelösung im Vorlagegefäß aufgefangen, indem diese Vorlagelösung über den Flüssigkeitsteiler an den Rückfluß-

kühler angeschlossen wird. Sobald der gesamte Stickstoffgehalt der Feststoffprobe in die Vorlagelösung überdestilliert und von dieser aufgefangen wurde, kann der in der Vorlagelösung gebundene Stickstoff durch übliche physikalische oder chemische Analysen quantitativ bestimmt werden.

Da keine Zufuhr von Ersatzwasser zum Lösekolben erforderlich ist, ist der apparative Aufwand besonders gering, so daß das erfindungsgemäße Verfahren auch in Handschuhkästen durchgeführt werden kann, wenn es sich bei der zu untersuchenden Feststoffprobe um einen radioaktiven Strahler, z.B. plutoniumhaltiges Material, handelt. Auch kann der Lösekolben zum Lösen einer schwer löslichen Feststoffprobe beliebig lange erhitzt werden, da das im Lösekolben verdampfende Wasser nicht ersetzt zu werden braucht, sondern im Rückflußkühler kondensiert und stets wieder in den Lösekolben zurückgeführt wird.

Eine Einrichtung, insbesondere zur Durchführung des erfindungsgemäßen Verfahrens, ist vorteilhafterweise dadurch gekennzeichnet, daß sich zwischen einem Rückflußkühler und einem Lösekolben ein Flüssigkeitsteiler mit einem Dreiwegehahn befindet und daß der Zuweg des Dreiwegehahnes zum Rückflußkühler, der eine Abweg zum Lösekolben und der andere Abweg zu einem Vorlagegefäß, geführt sind.

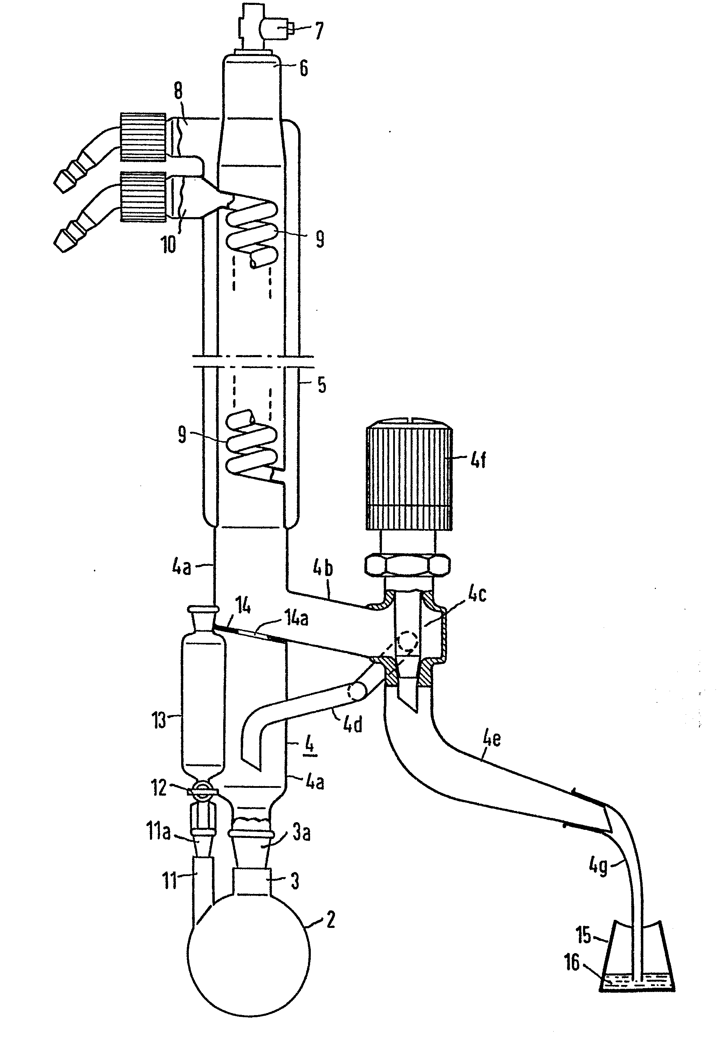

Die Erfindung und ihre Vorteile seien anhand der Zeichnung an einem Ausführungsbeispiel näher erläutert:

In der Zeichnung ist in Seitenansicht eine Einrichtung zur Durchführung des erfindungsgemäßen Verfahrens dargestellt. Diese Einrichtung weist einen Lösekolben 2 auf, der oben mit einem Hals 3 versehen und mit diesem Hals 3 über einen Schliff 3a unten an einem vertikalen Rohr 4a eines Flüssigkeitsteilers 4 angeschlossen ist. Dieses vertikale Rohr 4a geht in einen vertikal angeordneten, rohrförmigen Rückflußkühler 5 über, der an seinem oberen Ende 6 mit einem Überdruckventil 7 versehen ist. Der Mantel dieses Rückflußkühlers 5 ist doppelwandig ausgeführt, an seinem oberen Ende befindet sich ein Abführstutzen 8 für Kühlwasser, der von dem Zwischenraum im Mantel des Flüssigkeitskühlers 5 ausgeht. -

Im Innenraum des Rückflußkühlers 5 befindet sich eine koaxiale Rohrspirale 9, die am unteren Ende des Rückflußkühlers 5 in den Zwischenraum im Mantel dieses Rückflußkühlers 5 mündet und die am oberen Ende des Rückflußkühlers 5 mit einem nach außen geführten Zuführstutzen 10 für Kühlwasser versehen ist.

Der Lösekolben 2 weist oben einen weiteren Hals 11 auf, auf den über einen Schliff 11a ein mit einem Dosierventil 12 versehener Vorratsbehälter 13 für flüssige Natronlauge aufgesetzt ist.

Im vertikalen Rohr 4a des Flüssigkeitsteilers 4 befindet sich eine Blende 14, die etwa in einem Querschnitt des Rohres 4a angeordnet ist und die eine zentrale Durchtrittsöffnung 14a aufweist. Zwischen dem Rückflußkühler 5 und dieser Blende 14 zweigt vom vertikalen Rohr 4a ein Kondensatabführrohr 4b des Flüssigkeitsteilers 4 ab, das einen aus einem Glasnadelventil 4c bestehenden Dreiwegehahn aufweist. Das Kondensatabführrohr 4b
bildet den Zuweg des durch das Glasnadelventil 4c gebildeten Dreiwegehahnes, während eine von dem Glasnadelventil 4c abgehende, zwischen der Blende 14 und
dem Lösekolben 2 in das vertikale Rohr 4a mündende
Rohrleitung 4d einen ersten Abweg des durch die Glasnadel 4c gebildeten Dreiwegehahnes bildet. Ein zweiter
Abweg dieses Dreiwegehahnes ist durch eine vom Glasnadelventil 4c ausgehende weitere Rohrleitung 4e gebildet, die über ein Ablaufrohr 4g in ein Vorlagegefäß
15 mündet. Dieses Vorlagegefäß 15 enthält verdünnte
Schwefelsäure 16 als Vorgabelösung, in die das Ablaufrohr 4g hineinragt.

Durch Betätigen einer Handhabe 4f des Glasnadelventiles 4c kann durch das Kondensatabführrohr 4b strömendes
Kondensat bzw. Gas entweder ausschließlich über die
Rohrleitung 4d zum Lösekolben 2 oder über die Rohrleitung 4e und das Ablaufrohr 4g zum Vorlagegefäß 15
geleitet werden.

Eine Feststoffprobe, z.B. eine aus Uran-Plutonium-
Mischoxid bestehende Sintertablette, wird pulverisiert
und in den Lösekolben 2 zusammen mit einem flüssigen Gemisch aus Schwefel- und Phosphorsäure eingefüllt. Auf
den Hals 11 des Lösekolbens 2 wird sodann der mit
flüssiger Natronlauge gefüllte Behälter 13 aufgesetzt.
Schließlich wird der Lösekolben 2 mit dem Hals 3 am
vertikalen Rohr 4a des Flüssigkeitsteilers 4 angesetzt.

Der Lösekolben 2 wird sodann erhitzt. Hierbei ist das
Glasnadelventil 4c so gestellt, daß aus dem Kondensatabführrohr 4b ablaufendes Kondensat über die Rohrleitung 4d zum Lösekolben 2 zurückgeführt wird.

Im Lösekolben 2 aufsteigender Dampf passiert die zentrale Öffnung 14a der Blende 14 im vertikalen Rohr 4a des Flüssigkeitsteilers 4 und gelangt in den Rückflußkühler 5, in dem er an der Rohrspirale 9 und an der Innenwandung kondensiert. Das Kondensat läuft unter Einfluß der Schwerkraft im vertikalen Rohr 4a nach unten und wird von der Blende 14 in das Kondensatabführrohr 4b abgelenkt, von wo es in die Rohrleitung 4d gelangt.

Sobald die Feststoffprobe im Lösekolben 2 aufgelöst ist, wird das Dosierventil 12 geöffnet und durch Betätigen der Handhabe 4f des Glasnadelventiles 4c die Rohrleitung 4d geschlossen und die Rohrleitung 4e an das Kondensatabführrohr 4b angeschlossen.

Mit dem im Lösekolben 2 durch Erhitzen gebildeten Wasserdampf gelangen jetzt auch flüchtige Ammoniumverbindungen in den Rückflußkühler 5 und von dort zusammen mit kondensiertem Wasser durch das Kondensatabführrohr 4b und die Rohrleitung 4e in die Vorlagelösung 16 im Vorlagegefäß 15.

Diese Ammoniumverbindungen werden durch Zudosieren der Natronlauge aus dem Vorratsbehälter 13 in die im Lösekolben 2 befindliche Lösung aus den in der Feststoffprobe befindlichen Stickstoffverbindungen freigesetzt. In der Vorlagelösung 16 bilden diese Ammoniumverbindungen Ammoniumsulfat. Sobald der in den Stickstoffverbindungen der im Lösebehälter 2 aufgelösten Feststoffprobe enthaltene Stickstoff quantitativ in der Vorlagelösung 16 aufgefangen worden ist, stellt die in dieser Vorlagelösung 16 enthaltene Menge Ammoniumsulfat ein Maß für die in der Feststoffprobe enthaltene Menge Stickstoff dar. Die Ammoniumsulfatmenge in der Vorlagelösung 16 kann z.B. titrimetrisch,elektrometrisch
oder spektralphotometrisch bestimmt werden.

2 Patentansprüche
1 Figur

Patentansprüche

1. Verfahren zum quantitativen Bestimmen des Stickstoffgehaltes einer Feststoffprobe, die in stickstofffreier Säure in einem erhitzten Lösekolben gelöst wird, dessen Gasraum über der Lösungsflüssigkeit über einen Kühler mit einer sauren Vorlagelösung in einem Vorlagegefäß in Verbindung steht, in der nach Zugabe einer Alkalilauge zur im Lösekolben befindlichen Lösungsflüssigkeit dort entstehende flüchtige Ammoniumverbindungen aufgefangen werden, d a d u r c h g e - k e n n z e i c h n e t , daß als Kühler ein Rückflußkühler (5) mit zugeordnetem Flüssigkeitsteiler (4) verwendet wird, über den Kondensat aus dem Rückflußkühler (5) während des Lösens der Feststoffprobe in den Lösekolben (2) zurückgeführt und mit dem das Vorlagegefäß (15) zum Auffangen der Ammoniumverbindungen in der Vorlagelösung (16) an den Rückflußkühler (5) angeschlossen wird.

2. Einrichtung, insbesondere zur Durchführung des Verfahrens nach Anspruch 1, d a d u r c h g e k e n n - z e i c h n e t , daß sich zwischen einem Rückflußkühler (5) und einem Lösekolben (2) ein Flüssigkeitsteiler (4) mit einem Dreiwegehahn (4c) befindet und daß der Zuweg (4b) des Dreiwegehahnes (4c) vom Rückflußkühler (5), der eine Abweg (4d) zum Lösekolben (2) und der andere Abweg (4e) zu einem Vorlagegefäß (15) geführt sind.

0106120

82 P 6407

**Europäisches Patentamt**

# EUROPÄISCHER RECHERCHENBERICHT

EP 83108829.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>US - A - 3 905 770</u> (LEIF ROGER MOSSBERG)<br><br>* Gesamt *<br><br>-- | 1,2 | G 01 N 31/00 |
| X | HOUBEN-WEYL "Methoden der organischen Chemie", 4. Auflage, Band I/1: "Allgemeine Laboratoriumspraxis I", 1958<br>GEORG THIEME VERLAG, Stuttgart Seiten 790-793<br><br>* Seite 792, Abb. 13 *<br><br>-- | 2 | |
| X | ORGANIKUM, 7. Auflage, 1967<br>VEB DEUTSCHER VERLAG DER WISSENSCHAFTEN, Berlin Seite 51, Bild A.73.<br><br>---- | 2 | |

**RECHERCHIERTE SACHGEBIETE (Int. Cl. ³)**

G 01 N

Der vorliegende Recherchenbericht wurde für alle Patentansprüche erstellt.

| Recherchenort | Abschlußdatum der Recherche | Prüfer |
|---|---|---|
| WIEN | 14-12-1983 | TENGLER |